# EUROPEAN PATENT SPECIFICATION

(11) **EP 0 712 812 B1**
(45) Date of publication and mention of the grant of the patent: **17.05.2000**
(21) Application number: 95117793.0
(22) Date of filing: 10.11.1995
(51) Int. Cl.: C03B 7/10

(54) **Cutting unit, particularly for forming molten glass gobs**
Schneidevorrichtung, insbesondere für geschmolzene Glastropfen
Appareil de coupe, en particulier pour paraisons en verre

(30) Priority: 18.11.1994 IT TO940927
(43) Date of publication of application: 22.05.1996
(73) Proprietor: BOTTERO S.p.A., 12100 Roata Canale (Cuneo) (IT)
(72) Inventor: Giraudo, Vittore, I-12100 Cuneo (IT); Viada, Bruno, I-12010 Madonna Delle Grazie (IT); Tealdi, Alessandro, I-12089 Villanova Mondovi (IT)
(74) Representative: Boggio, Luigi

(56) References cited:
- EP-A- 0 490 294

## Description

The present invention relates to a cutting unit, particularly for forming molten glass gobs.

As is known, glassware is produced from molten glass gobs formed by extruding and transversely cutting a bead of molten glass by means of a cutting unit.

In most applications, "parallel scissor" type cutting units are used, which comprise at least one pair of shears or blades with respective cutting edges facing each other, a fixed straight guide, and a pair of slides traveling along the fixed guide and each supporting a respective blade.

Known cutting units also comprise a device for driving the slides and moving the blades cyclically back and forth along the guide, to and from a forward cutting position in which the blades cut the bead transversely into a gob.

Known drive devices are normally mechanical, and comprise a rotary electric motor with an output shaft rotating about its axis, and a mechanical gear or screw-nut screw transmission interposed between the output shaft and the slides, to convert the rotary movement of the output shaft into linear translatory movement of the slides (see e.g. EP-A1-0 490 294).

The drive device of known cutting units normally also comprises a mechanical disconnecting device for disconnecting the blades from the motor, for example, when changing the blades.

Though widely used, known cutting units present several drawbacks, all due to the design of the blade drive devices.

As is known, the blade drive devices are so designed as to minimize inertia and internal friction to achieve the maximum possible cutting rate, and to minimize slack between the moving parts, particularly those of the transmission between the motor and slides, to ensure precise, synchronous operation of the blades and precise cutting of the molten glass bead by preventing it from shifting from its set path during the cutting operation.

As a result, known drive devices are relatively complex in design, must be serviced and checked regularly, and, most important, are relatively expensive to produce and run as compared with the rest of the cutting unit.

It is an object of the present invention to provide a cutting unit designed to overcome the aforementioned drawbacks, and which in particular is of straightforward design, cheap to produce, and provides for a high degree of efficiency and reliability.

According to the present invention, there is provided a cutting unit, particularly for forming molten glass gobs, the unit comprising at least one pair of shearing members movable linearly back and forth in relation to each other; and a drive device for moving said shearing members to and from a forward cutting position along predetermined paths; characterized in that said drive device comprises two linear electric motors, each fixed to a respective shearing member; and control means for controlling said linear electric motors.

A number of non-limiting embodiments of the present invention will be described by way of example with reference to the accompanying drawings, in which:
Figure 1 shows a schematic side view of a first preferred embodiment of the cutting unit according to the present invention;
Figure 2 shows a view along line II-II in Figure 1;
Figure 3 shows a larger-scale section along line III-III in Figure 2;
Figure 4 shows a section, with parts removed for clarity, along line IV-IV in Figure 1;
Figure 5 shows the same view as in Figure 1, of a second preferred embodiment of the cutting unit according to the present invention;
Figure 6 shows a view along line VI-VI in Figure 5;
Figure 7 shows a larger-scale section along line VII-VII in Figure 6;
Figure 8 shows the same view as in Figure 1, of a third preferred embodiment of the cutting unit according to the present invention;
Figure 9 shows a larger-scale section of a detail in Figure 8;
Figure 10 shows a larger-scale section along line X-X in Figure 8.

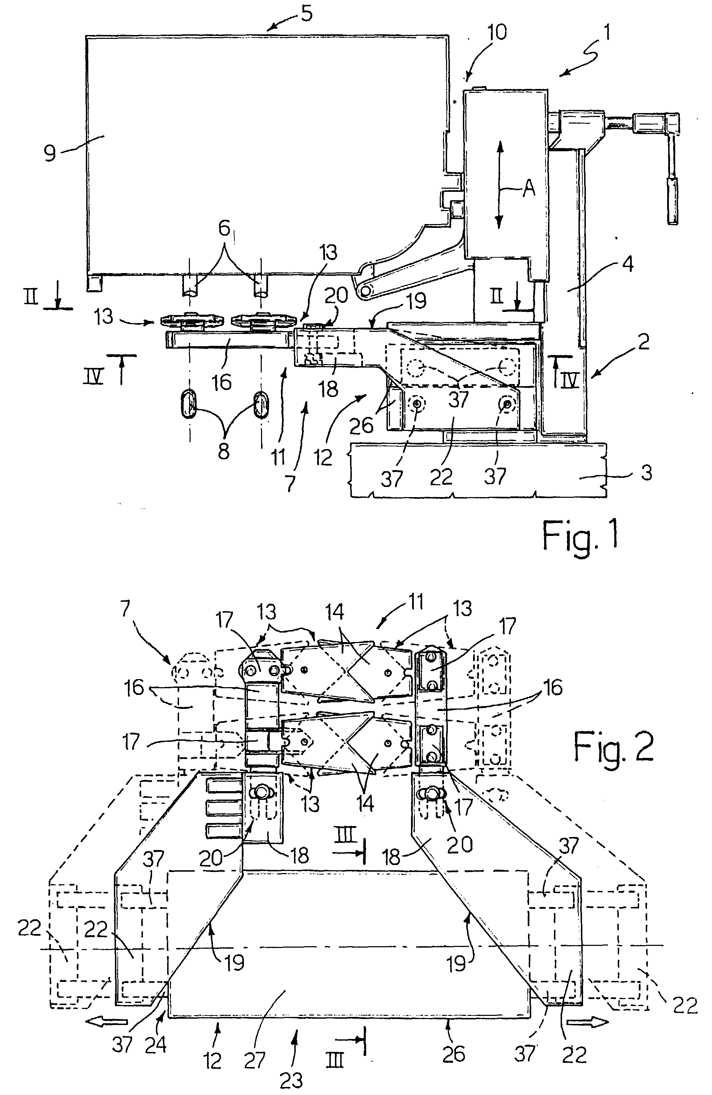

Number 1 in Figure 1 indicates a machine for making glassware (not shown). Machine 1 comprises a frame 2, which in turn comprises a base 3 and an upright 4 extending upwards from base 3, and supports an extrusion unit 5 for forming one or more beads 6 of molten glass, and a cutting unit 7 for cutting beads 6 transversely into a number of molten glass gobs 8.

More specifically, extrusion unit 5 comprises a tank or ladle 9 connected in known manner to upright 4, containing a mass of molten glass, and presenting, in this particular case, two bottom openings (not shown); and a pair of known punches (not shown), each for extruding a respective bead 6 through a respective said bottom opening.

As shown in Figure 1, cutting unit 7 is connected to upright 4 by a known connecting device 10 (not described in detail) for vertically adjusting unit 7 in direction A in relation to tank 9 and base 3, and comprises a known parallel-scissor type cutting device 11, and a device 12 for controlling and moving device 11 (Figure 2).

More specifically (Figure 2), cutting device 11 comprises two pairs of shearing members 13; the members 13 in each pair extend substantially in line with each other, perpendicular to direction A and the Figure 1 plane, and alongside the members 13 in the other pair; and each member 13 comprises a cutting blade 14 with a V-shaped cutting edge facing the cutting edge of blade 14 of the other member 13 in the same pair.

Cutting device 11 also comprises two parallel supporting rods 16 perpendicular to direction A and to which blades 14 are connected integrally by means of respective known connecting brackets 17. Rods 16 project from respective end portions 18 of respective operating arms 19 to which rods 16 are connected by respective known, preferably screw-nut screw type adjusting devices 20 for adjusting the position of rods 16, and hence respective blades 14, in directions parallel to direction A.

Arms 19 form part of control device 12, which provides for moving rods 16, and hence members 13 in each pair, back and forth linearly, and to and from the forward cutting position shown in Figure 2, wherein blades 14 of each pair of members 13 cut respective bead 6 transversely into a respective gob 8.

Each arm 19 presents an end portion 22 opposite end portion 18 and connected directly to a respective electric linear actuator 23 of the same size and design as actuator 23 of the other arm 19, and both of which form part of control device 12.

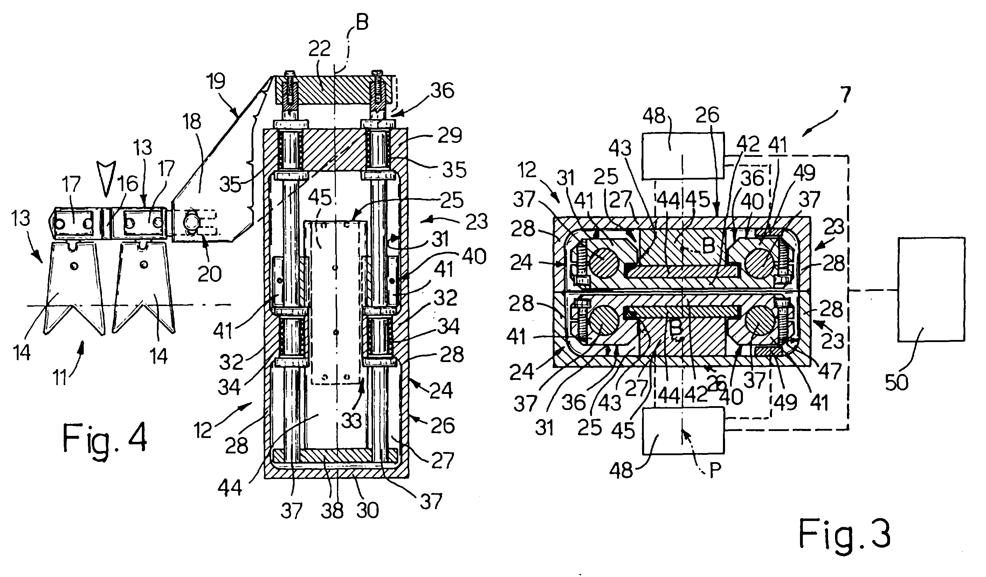

With reference to Figure 2 and particularly Figure 4, each linear actuator 23 comprises a guide and slide assembly 24, and a linear, e.g. brushless, electric motor 25 for driving respective assembly 24.

As shown in Figure 4, each actuator 23 also comprises an elongated outer casing 26 which, in use, is fixed in relation to frame 2, in turn comprises a U-shaped body with a rectangular central wall 27 and two rectangular lateral walls 28, and is closed axially by two end walls 29 and 30 extending crosswise to lateral walls 28 and to the traveling direction of blades 14. Casing 26 defines a cavity 31, and comprises two internal projections 32 facing each other, extending towards each other from respective intermediate portions of respective walls 28, and forming, together with casing 26, two portions of a double axial guide 33 (Figure 4) of respective assembly 24.

Guide 33 comprises two first known rolling bearings 34 housed inside respective seats formed in projections 32; and two second known rolling bearings 35 housed inside respective seats formed in wall 29 and coaxial with the corresponding seats formed in projections 32.

Assemblies 24 also comprise respective slides 36 connected in axially-sliding manner to respective guides 33, and movable along respective straight paths B parallel to and transversely spaced in relation to each other and lying in a vertical plane P (Figure 3).

Each slide 36 comprises two parallel, in this case, circular-section rods 37, each engaging in sliding manner a respective pair of bearings 34, 35 which define a guide for respective rod 37. Rods 37 present respective end portions connected integral with each other by a cross member 38 (Figure 4) housed inside cavity 31 and facing wall 30; and respective opposite end portions projecting beyond wall 29 and connected integral with portion 22 of respective arm 19.

As shown in Figure 4, rods 37 are also connected integral with each other by a further intermediate cross member 40 extending inside cavity 31 between projections 32 and wall 29, and comprising two lateral sleeve portions 41 inside which respective intermediate portions of rods 37 are locked. Cross member 40 also comprises a central plate portion 42 defining, together with lateral portions 41, a cavity or seat 43, and is activated by respective motor 25. As shown in Figure 3, motor 25 extends substantially between respective rods 37, and comprises a translating member 44 extending between and parallel to rods 37 and through seat 43, and a fixed member 45 extending partly between portions 41, positioned facing member 44, and connected integral with the inner surface of wall 27 of respective casing 26 by means of a number of screws.

With reference to Figure 1 and particularly Figure 3, the two linear actuators 23 are placed one on top of the other and over base 3; and the respective outer casings 26 present their respective concavities facing each other, and are connected to each other to define an airtight chamber 47 housing motors 25, cross member 40, and part of rods 37, the remaining part of which projects outwards of respective cavity 31.

As shown in Figure 3, for each motor 25, control device 12 comprises a known electronic unit 48 for driving respective motor 25 independently of the other unit 48; and a known position transducer 49. In the example shown, each transducer 49 is interposed between respective wall 27 and one of portions 41 of respective cross member 40 (Figure 3), and cooperates with respective unit 48 to move member 44 of respective motor 25, and hence respective shearing members 13, back and forth cyclically along a known predetermined path varying as a function of the diameter of beads 6.

Control device 12 also comprises a central unit 50 for synchronizing the extrusion punch (not shown) and cutting unit 7 in known manner to obtain gobs of a given weight, and which is connected electrically to units 48 to synchronize, in use, the two linear actuators 23 in such a manner as to prevent, during the cutting operation, a shift in the paths of beads 6 indicated by the dotted lines in Figure 1.

In actual use, and commencing from the standby condition in which blades 14 of each pair of shearing members 13 are set to the withdrawn standby position shown by the dotted line in Figure 2, central unit 50 is activated to operate actuators 23 by means of units 48, and so move blades 14 of each pair of shearing members 13 gradually towards each other and respective bead 6, and into the forward cutting position shown by the continuous line in Figure 2. More specifically, when activated, each unit 48 operates respective motor 25, the translating member 44 of which moves in relation to fixed member 45, taking with it respective cross member 40 which, being connected integral with rods 37, moves rods 37 in relation to respective casing 26, thus moving respective arm 19.

Again in actual use, by activating units 48, it is also possible to effect a fine adjustment of the position of respective arms 19, and hence respective blades 14, in relation to the path of beads 6, to perfectly synchronize blades 14 and ensure a clean cut with no shift of beads 6 in relation to the set path.

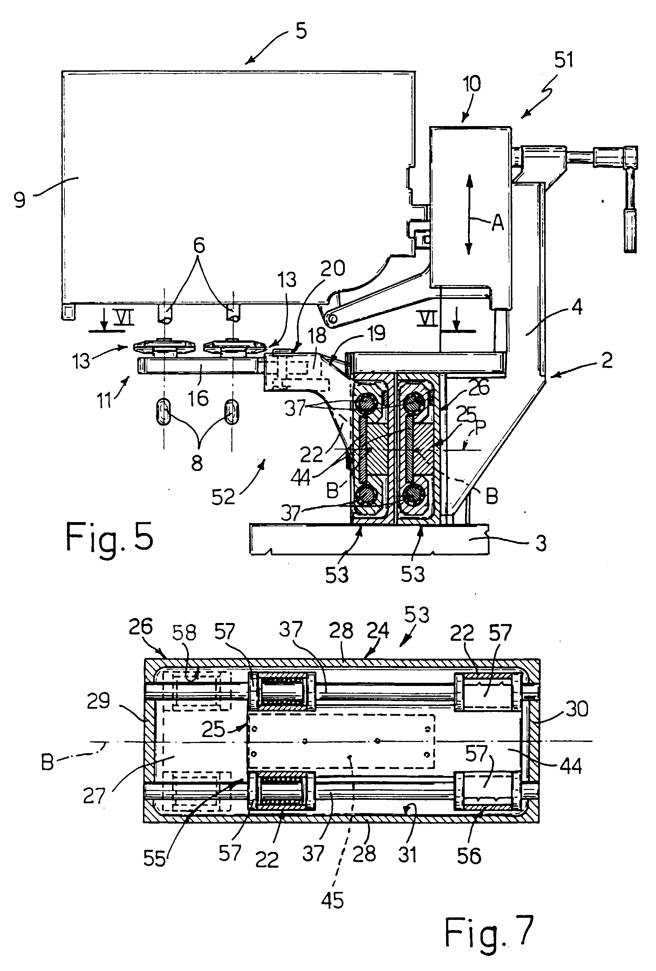

The Figure 5 embodiment relates to a molten glass gob forming machine 51 differing slightly from machine 1, and the corresponding component parts of which are indicated, wherever possible, using the same numbering system.

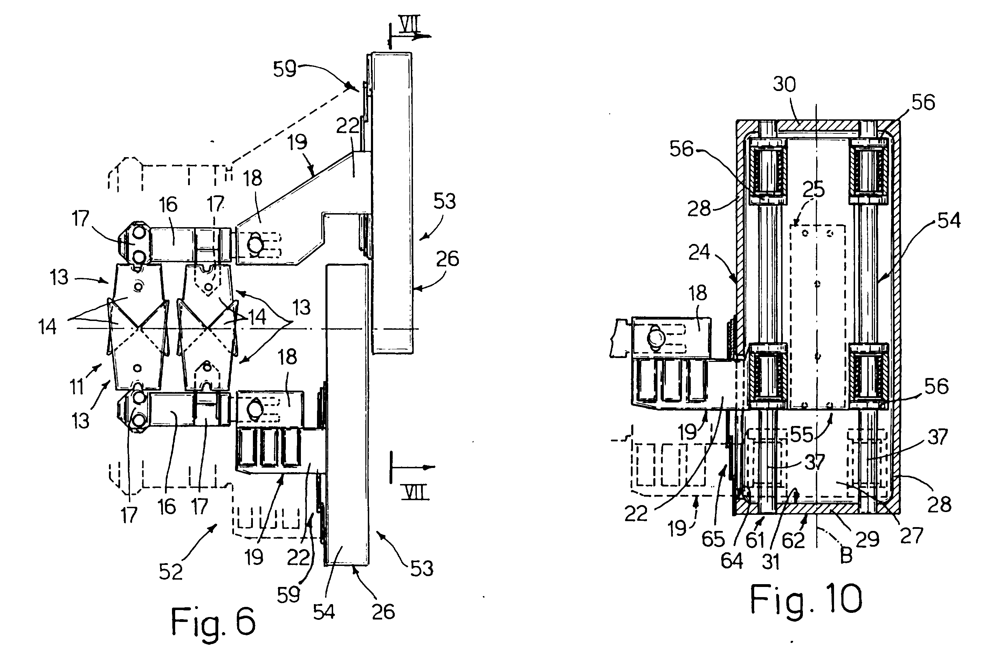

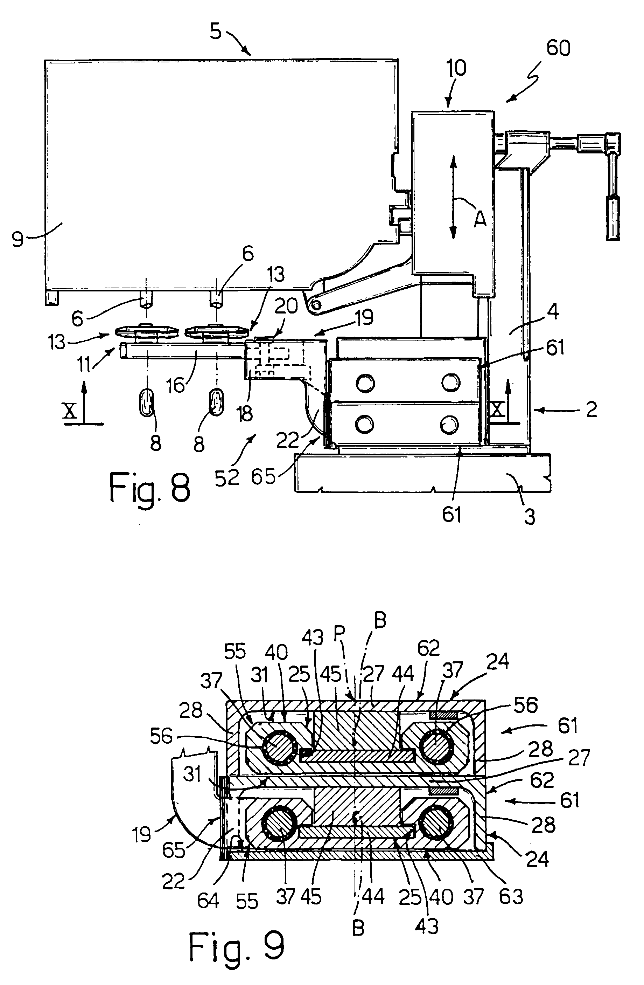

Machine 51 comprises a cutting unit 52 which differs from unit 7 by comprising two actuators 53, in turn differing from actuators 23 by presenting respective outer casings 26 with no projections 32 (Figure 7) and adjacent to each other. More specifically, casings 26 of actuators 53 are equioriented with their respective concavities both facing away from upright 4, and are offset in relation to each other in a direction parallel to the travel direction of blades 14 (Figure 6).

As shown in Figure 7, actuators 53 also differ from actuators 23 by each of respective guide and slide assemblies 24 comprising a guide 55 defined by two rods 37 with respective opposite end portions connected integral with walls 29 and 30. Assemblies 24 of actuators 53 also comprise respective slides 56 movable along respective straight, parallel, transversely spaced paths B lying in a horizontal plane P. Each slide 56 is defined by two pairs of aligned sleeves 57 connected to respective rods 37 in axially-sliding manner by respective rolling bearings, and connected integral with translating member 44 of respective linear motor 25, the fixed member 45 of which is again integral with the central wall 27 of respective casing 26.

Cutting unit 52 also differs from unit 7 by portions 22 of respective arms 19 of each actuator 53 being connected in known manner integral with a respective slide 56, and projecting outwards of respective casings 26 through respective openings 58 facing respective walls 27 and forming part of the opening of respective cavity 31.

Each actuator 53 also comprises a respective sliding seal device 59 (Figure 6) fitted to respective casing 26 and respective arm 19, and closing the respective said opening 58 to prevent foreign bodies such as dust or pieces of glass from entering respective cavity 31 through opening 58.

The Figure 8 embodiment relates to a molten glass gob forming machine 60 differing slightly from machine 51, and the corresponding component parts of which are indicated, wherever possible, using the same numbering system.

The cutting unit 52 of machine 60 comprises two actuators 61 similar to actuators 53 and placed one on top of the other and on top of base 3 so that paths B (Figure 9) are located in the same position as paths B relative to actuators 26. More specifically, actuators 61 comprise respective outer casings 62 similar to casings 26 and equioriented in relation to base 3. That is, casings 62 present their concavities both facing base 3; the opening of the top cavity 31 is closed entirely by central wall 27 of the bottom casing 62; and the bottom cavity 31 is closed by a cover 63 interposed between the bottom casing 62 and base 3.

Portions 22 of respective arms 19 of actuators 61 are again connected integral with respective slides 56, and arms 19 project outwards of respective casings 62 through respective elongated lateral openings 64 (Figure 10), each formed in a respective wall 28 facing away from upright 4, and each extending from a respective wall 29.

Each actuator 61 also comprises a respective sliding seal device 65 fitted to respective casing 62 and respective arm 19, and closing respective opening 64 to prevent foreign bodies such as dust or pieces of glass from entering respective cavity 31 through opening 64.

As compared with known cutting units, units 7 and 52 are therefore extremely straightforward in design, and relatively cheap to both produce and maintain.

This is mainly due to the particular design of devices 12 controlling shearing members 13 and, hence, cutting blades 14. In fact, using linear electric motors, as opposed to rotary motors as at present, provides first and foremost for eliminating the mechanical transmission which in known control devices is interposed between the output shaft of the rotary motor and the blade slides to convert the rotary movement of the output shaft into a linear movement of the slides.

As compared with known cutting units, units 7 and 52 therefore also present very little inertia, substantially no slack, and hence an extremely high degree of efficiency and reliability.

Connecting arms 19 of units 7, 52 rigidly to the translating members 44 of motors 25, as opposed to transmission devices, provides, as compared with known cutting units, for greatly reducing the inertia and slack preventing an increase in cutting frequency and which, as stated, impair precise movement of the slides and the quality of the cut.

Moreover, providing control devices 12 with two motors 25, each connected directly to a respective arm 19, and each provided with a respective control unit 48, permits fine adjustment of blades 14 in relation to each other and to the path of beads 6. In other words, direct connection of motors 25 to respective arms 19, and the possibility of controlling motors 25 independently, ensure blades 14 are synchronized perfectly at all times, and so prevent any inflection of beads 6 during the cutting operation.

Finally, the presence of two linear motors and respective control units 48 provides for greatly simplifying the blade disconnecting device.

As such, cutting units 7 and 52 provide, as compared with known units, for considerably increasing the cutting rate which, as regards the cutting unit, substantially depends on the functional characteristics of motors 25.

Moreover, the location of motors 25 between guides 33, 55 of respective guide and slide assembly 24 makes for extremely compact units 7 and 52, while the arrangement of casings 26 of unit 7 and the adoption of sealing devices 59 and 65 in units 52 enable motors 25 and respective guide and slide assemblies 24 to operate in an airtight environment.

Clearly, changes may be made to cutting units 7 and 52 as described and illustrated herein without, however, departing from the scope of the present invention.

For example, provision may be made for guide and slide assemblies other than those described herein, and in particular comprising a single straight guide fitted with two slides.

Changes may be made to both the arrangement and the manner in which motors 25 are connected to respective slides 36, 56; to the number of pairs of shearing members 13; and to the manner in which the shearing members are connected to respective arms 19.

Provision may be made for linear electric motors other than those described herein, and in particular for electric open-loop-controlled step motors, or motors presenting different geometric characteristics for further reducing size and/or increasing the cutting rate.

Finally, guide and slide assemblies 24 may be dispensed with, and the translating members 44 of motors 25 be connected directly to respective shearing members 13.

## Claims

1. A cutting unit (7; 52), particularly for forming molten glass gobs (8), the unit (7; 52) comprising at least one pair of shearing members (13) movable linearly back and forth in relation to each other; and a drive device (12) for moving said shearing members to and from a forward cutting position along predetermined paths; characterized in that said drive device (12) comprises two linear electric motors (25), each fixed to a respective shearing member (13); and control means (48, 50) for controlling said linear electric motors (25).

2. A unit as claimed in Claim 1, characterized in that said drive device (12) also comprises straight guide means (33; 55); and, for each shearing member (13), a slide (36; 56) connected in axially-sliding manner to said guide means (33; 55) and supporting a respective shearing member (13); each said linear electric motor (25) powering a respective said slide (36; 56).

3. A unit as claimed in Claim 2, characterized in that each said linear electric motor (25) comprises a respective fixed member (45), and a respective translating member (44) rigidly connected to a respective said slide (36; 56).

4. A unit as claimed in Claim 2 or 3, characterized in that said drive device (12) comprises two separate linear actuators (23; 53; 61), each comprising a respective said slide (36; 56) and a respective said linear electric motor (25); said guide means (33; 55) comprising, for each said linear actuator (23; 53; 61), a respective straight guide (33; 55); said straight guides (33; 55) being parallel, and said slides (36; 56) being connected in sliding manner to the respective straight guides (33; 55) so as to move along respective parallel paths (B).

5. A unit as claimed in Claim 4, characterized in that said paths (B) are spaced transversely.

6. A unit as claimed in Claim 5, characterized in that said linear electric motors (25) are each located substantially along a respective said path (B).

7. A unit as claimed in one of the foregoing Claims 4 to 6, characterized in that each said guide (33; 55) comprises a respective pair of straight, transversely spaced guides (34, 35; 37).

8. A unit as claimed in Claim 7, characterized in that each said linear electric motor (25) is located between the guides (34, 35; 37) of a respective said pair of straight guides (34, 35; 37).

9. A unit as claimed in Claim 7 or 8, characterized in that each said linear actuator (23; 53; 61) also comprises a respective elongated body (26; 62) presenting a cavity (31); said cavity (31) housing the respective pair of guides (34, 35; 37), at least partly a respective said slide (36; 56), and a respective said linear electric motor (25).

10. A unit as claimed in Claim 9, characterized in that each said elongated body (26; 62) is a fixed body; and the respective said linear electric motor (25) comprises a fixed member (45) connected integrally to the elongated body (26; 62), and a translating member (44) connected integrally to the respective said slide (36; 56).

11. A unit as claimed in Claim 9 or 10, characterized in that the cavities (31) of said elongated bodies (26; 62) face each other, and the elongated bodies (26; 62) are connected to each other to define an airtight chamber (47) housing both said linear electric motors (25); said slides (36) projecting outwards of said airtight chamber (47).

12. A unit as claimed in Claim 11, characterized in that said paths (B) of the slides (36) lie in a vertical plane (P).

13. A unit as claimed in Claim 9 or 10, characterized in that said elongated bodies (26; 62) are equioriented.

14. A unit as claimed in Claim 13, characterized in that said elongated bodies (26; 62) are adjacent to each other and offset in the traveling direction of said slides (56); said paths (B) lying in a horizontal plane (P).

15. A unit as claimed in Claim 13, characterized in that said elongated bodies (26; 62) are superimposed, and said paths (B) lie in a vertical plane (P).

16. A unit as claimed in one of the foregoing Claims 13 to 15, characterized in that each said actuator (23; 53; 61) also comprises a respective rigid arm (19) connecting the respective said slide (36; 56) to a respective said shearing member (13); and movable sealing means (59; 65) associated with the respective said elongated body (26; 62) and the respective arm (19) to prevent foreign bodies from entering the respective said cavity (31) as the respective slide (56) travels along the respective guide (55).

17. A unit as claimed in any one of the foregoing Claims 4 to 16, characterized in that said actuators (23; 53; 61) are the same.

18. A unit as claimed in any one of the foregoing Claims, characterized in that said control means (48, 50) comprise first and second activating and control means (48) respectively connected electrically to a first and second said linear electric motor (25); said activating and control means (48) controlling said linear electric motors (25) independently of each other.

19. A unit as claimed in Claim 18, characterized in that said control means (48, 50) comprise synchronizing means (50) for synchronizing said linear electric motors (25).

20. A unit as claimed in Claim 18 or 19, characterized in that said first and second activating and control means (48) comprise respective position transducer means (49).

21. A unit as claimed in Claim 20, characterized in that said position transducer means (49) extend between a fixed member (45) and a translating member (44) of each said linear electric motor (25).

## Patentansprüche

1. Schneideeinheit (7; 52), inbesondere zum Bilden geschmolzener Glastropfen (8), die Einheit (7; 52) aufweisend mindestens ein Paar Scherglieder (13), die relativ zueinander geradlinig hin und zurück bewegbar sind, und eine Antriebsvorrichtung (12) zum Bewegen der Scherglieder in und aus einer vorderen Schneidestellung entlang vorbestimmter Bahnen, dadurch gekennzeichnet, dass die Antriebsvorrichtung (12) zwei elektrische Linearmotoren (25) aufweist, wobei jeder an einem jeweiligen Scherglied (13) befestigt ist, und Steuerungsmittel (48, 50) zum Steuern der elektrischen Linearmotoren (25).

2. Schneideeinheit nach Anspruch 1, dadurch gekennzeichnet, dass die Antriebsvorrichtung (12) ferner aufweist geradlinige Führungsmittel (33; 55) und für jedes Scherglied (13) jeweils einen Schlitten (36; 56), der mit den Führungsmitteln (33; 55) axial-gleitend verbunden ist und jeweils ein Scherglied (13) trägt, wobei jeder Schlitten (36, 56) von jeweils einem elektrischen Linearmotor angetrieben wird.

3. Schneideeinheit nach Anspruch 2, dadurch gekennzeichnet, dass jeder elektrische Linearmotor (25) aufweist jeweils ein festgelegtes Glied (45), und jeweils ein verschiebbares Glied (44), das jeweils mit dem Schlitten (36; 56) starr verbunden ist.

4. Schneideeinheit nach Anspruch 2 oder 3, dadurch gekennzeichnet, dass die Antriebsvorrichtung (12) aufweist zwei getrennte Linearstellantriebe (23; 53; 61), welche jeweils einen Schlitten (36; 56) und einen elektrischen Linearmotor (25) aufweisen; Führungsmittel (33; 55) weisen für jeden Linearstellantrieb (23; 53; 61) eine geradlinige Führung (33; 55) auf; die geradelinigen Führungen (33; 55) sind parallel angeordnet und jeweils mit der Schlitten (36; 56) verbunden, so dass die Schlitten (36; 56) entlang der jeweiligen parallelen Bahnen (B) bewegbar sind.

5. Schneideeinheit nach Anspruch 4, dadurch gekennzeichnet, dass die Bahnen (B) mit Zwischenraum quer angeordnet sind.

6. Schneideeinheit nach Anspruch 5, dadurch gekennzeichnet, dass die elektrischen Linearmotoren (25) jeweils im wesentlichen entlang der jeweiligen Bahn (B) angeordnet sind.

7. Schneideeinheit nach einem der Ansprüche 4 bis 6, dadurch gekennzeichnet, dass jede Führung ( 33; 55) jeweils ein Paar geradlinig, mit Zwischenraum und quer angeordnete Führungen (34; 35; 37) aufweist.

8. Schneideeinheit nach Anspruch 7, dadurch gekennzeichnet, dass jeder elektrische Linearmotor (25) jeweils zwischen den Führungen ( 34; 35; 37) des jeweiligen Paars der geraden Führungen ( 34; 35; 37) angeordnet ist.

9. Schneideeinheit nach Anspruch 7 oder 8, dadurch gekennzeichnet, dass jeder Linearstellantrieb (23; 53; 61) ferner aufweist jeweils ein längliches Gehäuse (26; 62), das einen Hohlraum (31) aufweist; in dem Hohlraum (32) sind jeweils die Paare der Führungen (34; 35; 37), mindestens ein Abschnitt des jeweiligen Schlittens (36; 56) und ein elektrischer Linearmotor (25) untergebracht.

10. Schneideeinheit nach Anspruch 9, dadurch gekennzeichnet, dass jedes längliche Gehäuse (26; 62) ein starres Gehäuse ist und der jeweilige elektrische Linearmotor (25) ein festgelegtes Glied (45), das mit dem länglichen Gehäuse (26; 62) starr verbunden ist und ein bewegbares Glied (44), das mit dem Schlitten (36; 56) fest verbunden ist, aufweist.

11. Schneideeinheit nach Anspruch 9 oder 10, dadurch gekennzeichnet, dass die Hohlräume (31) der länglichen Gehäuse (26; 62) einander zugewandt angeordnet sind, und die länglichen Gehäuse (26; 62) miteinander verbunden sind, so dass sie eine luftdichte Kammer (47) definieren, in der beide elektrische Linearmotoren (25) untergebracht sind und wobei die Schlitten (36) sich aus der luftdichten Kammer (47) erstrecken.

12. Schneideeinheit nach Anspruch 11, dadurch gekennzeichnet, dass die Bahnen (B) der Schlitten (36) in einer vertikalen Ebene (P) liegen.

13. Schneideeinheit nach Anspruch 9 oder 10, dadurch gekennzeichnet, dass die länglichen Gehäuse (26; 62) in gleicher Orientierung angeordnet sind.

14. Schneideeinheit nach Anspruch 13, dadurch gekennzeichnet, dass die länglichen Gehäuse (26; 62) versetzt nebeneinander in der Laufrichtung der zuvorerwähnten Schlitten (56) angeordnet sind, wobei die Bahnen (B) in einer horizontalen Ebene (P) liegen.

15. Schneideeinheit nach Anspruch 13, dadurch gekennzeichnet, dass die länglichen Gehäuse (26, 62) übereinander angeordnet sind und die Bahnen (B) in einer vertikalen Ebene (P) liegen.

16. Schneideeinheit nach einem der Ansprüche 13 bis 15, dadurch gekennzeichnet, dass jeder Stellantrieb (23; 53; 61) ferner aufweist jeweils einen starren Arm (19), welcher den jeweiligen Schlitten (36; 56) mit dem jeweiligen Scherglied (13) verbindet und bewegbare Dichtungsmittel (59; 65), die mit den jeweiligen länglichen Gehäusen (26; 62) und dem jeweiligen Arm (19) verbunden sind, um das Eindringen von Fremdkörpern in den Hohlraum (31) zu verhindern, wenn der jeweilige Schlitten (56) entlang der jeweiligen Führung (55) gleitet.

17. Schneideeinrichtung nach einem der Ansprüche 4 bis 16, dadurch gekennzeichnet, dass die Stellantriebe (23; 53; 61) gleich sind.

18. Schneideeinheit nach einem der vorangegangenen Ansprüche, dadurch gekennzeichnet, dass die Steuermittel (48, 50) erste und zweite Schalt- und Steuermittel (48) aufweisen, welche jeweils mit einem ersten und zweiten elektrischen Linearmotor (25) elektrisch gekoppelt sind, die die elektrische Linearmotoren (25) unabhängig voneinander steuern.

19. Schneideeinheite nach Anspruch 18, dadurch gekennzeichnet, dass die Steuermittel (48, 50) Synchronisationsmittel (50) aufweisen, welche die elektrischen Linearmotoren (25) synchronisieren.

20. Schneideeinheit nach Anspruch 18 oder 19, dadurch gekennzeichnet, dass die ersten und die zweiten Schalt- und Steuermittel (48) jeweils Positions-Messumwandlungsmittel (49) aufweisen.

21. Schneideeinheit nach Anspruch 20, dadurch gekennzeichnet, dass die Positions-Messumwandlungsmittel (49) sich zwischen dem festgelegten Glied (45) und dem bewegbaren Glied (44) jedes elektrischen Linearmotors (25) erstrecken.

## Revendications

1. Unité de coupe (7; 52), en particulier pour former des masses (8) de verre fondu, l'unité (7; 52) comprenant au moins une paire d'organes de cisaillement (13) mobiles linéairement en va-et-vient l'un par rapport à l'autre; et un dispositif de commande (12) pour déplacer lesdits organes de cisaillement le long de trajets prédéterminés en les rapprochant ou en les éloignant d'une position de coupe avancée; caractérisée par le fait que ledit dispositif de commande (12) comprend deux moteurs électriques linéaires (25), chacun fixé à un organe de cisaillement (13) respectif; et des moyens de commande (48, 50) pour commander lesdits moteurs électriques linéaires (25).

2. Unité selon la revendication 1, caractérisée par le fait que ledit dispositif de commande (12) comprend aussi un moyen de guidage rectiligne (33; 55); et, pour chaque organe de cisaillement (13), un élément coulissant (36; 56) couplé en coulissement axial audit moyen de guidage (33; 55) et supportant un organe de cisaillement (13) respectif; chacun desdits moteurs électriques linéaires (25) actionnant un élément coulissant (36; 56) respectif.

3. Unité selon la revendication 2, caractérisée par le fait que chacun desdits moteurs électriques linéaires (25) comprend un élément fixe (45) respectif, et un élément à mouvement de translation (44) respectif relié rigidement à un élément coulissant (36; 56) respectif.

4. Unité selon la revendication 2 ou 3, caractérisée par le fait que ledit dispositif de commande (12) comprend deux actionneurs linéaires séparés (23; 53; 61) qui comprennent chacun un élément coulissant (36; 56) respectif et un moteur électrique linéaire (25) respectif; ledit moyen de guidage (33; 55) comprenant, pour chaque actionneur linéaire (23; 53; 61), un guide rectiligne (33; 55) respectif; lesdits guides rectilignes (33; 55) étant parallèles, et lesdits éléments coulissants (36; 56) étant couplés en coulissement aux guides rectilignes (33; 55) respectifs de façon à se déplacer le long de trajets parallèles (B) respectifs.

5. Unité selon la revendication 4, caractérisée par le fait que lesdits trajets (B) sont espacés transversalement.

6. Unité selon la revendication 5, caractérisée par le fait que chaque moteur électrique linéaire (25) est positionné sensiblement le long d'un trajet (B) respectif.

7. Unité selon l'une quelconque des revendications 4 à 6, caractérisée par le fait que chaque guide (33; 55) comprend une paire respective de guides rectilignes (34, 35; 37) transversalement espacés.

8. Unité selon la revendication 7, caractérisée par le fait que chaque moteur électrique linéaire (25) est placé entre les guides (34, 35; 37) d'une paire respective de guides rectilignes (34, 35; 55).

9. Unité selon la revendication 7 ou 8, caractérisée par le fait que chaque actionneur linéaire (23; 53; 61) comprend aussi un corps allongé (26; 62) respectif présentant une cavité (31); ladite cavité (31) contenant la paire respective de guides (34, 35; 37), au moins partiellement un guide (36; 56) respectif, et un moteur électrique linéaire (25) respectif.

10. Unité selon la revendication 9, caractérisée par le fait que chaque corps allongé (26; 62) est un corps fixe; et ledit moteur électrique linéaire (25) respectif comprend un élément fixe (45) relié monobloc au corps allongé (26; 62), et un élément à mouvement de translation (44) relié monobloc audit élément coulissant (36; 56) respectif.

11. Unité selon la revendication 9 ou 10, caractérisée par le fait que les cavités (31) desdits corps allongés (26; 62) se font face, et les corps allongés (26; 62) sont rattachés l'un à l'autre pour définir une chambre étanche à l'air (47) contenant les deux moteurs électriques linéaires (25); lesdits éléments coulissants (36) faisant saillie hors de ladite chambre étanche à l'air (47).

12. Unité selon la revendication 11, caractérisée par le fait que lesdits trajets (B) des éléments coulissants (36) sont inclus dans un plan vertical (P).

13. Unité selon la revendication 9 ou 10, caractérisée par le fait que lesdits corps allongés (26; 62) sont pareillement orientés.

14. Unité selon la revendication 13, caractérisée par le fait que lesdits corps allongés (26; 62) sont adjacents l'un à l'autre et décalés dans la direction de déplacement desdits éléments coulissants (56); lesdits trajets (B) étant inclus dans un plan horizontal (P).

15. Unité selon la revendication 13, caractérisée par le fait que lesdits corps allongés (26; 62) sont superposés, et lesdits trajets (B) sont inclus dans un plan vertical (P).

16. Unité selon l'une quelconque des revendications 13 à 15, caractérisée par le fait que chaque actionneur (23; 53; 61) comprend aussi un bras rigide (19) reliant ledit élément coulissant (36; 56) respectif à un organe de cisaillement (13) respectif; et un moyen d'étanchéité mobile (59; 65) associé audit corps allongé (26; 62) respectif et au bras (19) respectif pour empêcher l'entrée de corps étrangers dans ladite cavité (31) à mesure que l'élément coulissant (56) respectif se déplace le long du guide (55) respectif.

17. Unité selon l'une quelconque des revendications 4 à 16, caractérisée par le fait que lesdits actionneurs (23; 53; 61) sont les mêmes.

18. Unité selon l'une quelconque des revendications précédentes, caractérisée par le fait que lesdits moyens de commande (48, 50) comprennent des premier et second moyens d'activation et de commande (48) respectivement connectés électriquement à un premier et un second desdits moteurs électriques linéaires (25); lesdits moyens d'activation et de commande (48) commandant lesdits moteurs électriques linéaires (25) indépendamment l'un de l'autre.

19. Unité selon la revendication 18, caractérisée par le fait que lesdits moyens de commande (48, 50) comprennent des moyens de synchronisation (50) pour synchroniser lesdits moteurs électriques linéaires (25).

20. Unité selon la revendication 18 ou 19, caractérisée par le fait que lesdits premier et second moyens d'activation et de commande (48) comprennent des moyens formant transducteurs de position (49) respectifs.

21. Unité selon la revendication 20, caractérisée par le fait que lesdits moyens formant transducteurs de position (49) s'étendent entre un élément fixe (45) et un élément à mouvement de translation (44) de chaque moteur électrique linéaire (25).
